# EUROPÄISCHE PATENTSCHRIFT

(11) **EP 0 885 269 B1**
(45) Veröffentlichungstag und Bekanntmachung des Hinweises auf die Patenterteilung: **22.12.1999**
(21) Anmeldenummer: 97906175.1
(22) Anmeldetag: 06.03.1997
(51) Int. Cl.: C09D 191/08, C09D 5/08, C08L 91/08

(54) **KORROSIONSSCHUTZMITTEL**
ANTICORROSIVE AGENT
AGENT ANTICORROSION

(30) Priorität: 06.03.1996 DE 19608678
(43) Veröffentlichungstag der Anmeldung: 23.12.1998
(73) Patentinhaber: Schümann Sasol GmbH & Co. KG, 20457 Hamburg (DE)
(72) Erfinder: VOGEL, Werner, D-22359 Hamburg (DE); SCHWITTAY, Winfried, D-72218 Wildberg (DE); FREUDENBERG, Werner, D-01187 Dresden (DE)
(74) Vertreter: Müller, Enno, Dipl.-Ing.
(86) Internationale Anmeldenummer: EP9701121
(87) Internationale Veröffentlichungsnummer: WO9732939

(56) Entgegenhaltungen:
- EP-A- 0 414 967
- WO-A-89/04856
- US-A- 4 729 791
- US-A- 5 294 251

## Beschreibung

Die Erfindung betrifft ein Korrosionsschutzmittel, vorzugsweise ein wachsartiges Korrosionsschutzmittel. Darüber hinaus betrifft die Erfindung auch ein Verfahren zum Aufbringen eines Korrosionsschutzmittels.

Wachsartige Korrosionsschutzmittel sind bereits bekanntgeworden. Man verwendet sie bspw. zur Konservierung von Hohlräumen und Unterböden im Kraftfahrzeugbereich, sie können auch zum Konservieren von Ersatzteilen und Blechen verwendet werden. Üblicherweise wird ein solches Korrosionsschutzmittel als lösungsmittelhaltiges oder wäßriges Beschichtungsmittel hergestellt und bei Raumtemperatur oder erhöhter Raumtemperatur von bis zu 45°C auf die zu schützende Fläche aufgebracht. Durch Verdampfen des Lösungsmittels oder des Wassers bildet sich ein verfestigter Korrosionsschutzmittelfilm.

Es sind auch bei Raumtemperatur aufzubringende lösungsmittelfreie Beschichtungen bekannt, welche einen hohen Anteil an Polymeren aufweisen. Die Polymere vernetzen mit Luftsauerstoff. Diese bekannten Korrosionsschutzmittel besitzen auch einen geringen Wachs- oder Paraffinanteil, welcher jedoch hinsichtlich der Produkteigenschaften nicht bestimmend ist.

Es ist darüber hinaus ein gemeinhin als "Flutwachs-Verfahren" bezeichnetes Korrosionsschutzmittel-System bekannt. Teilweise werden die bekannten Korrosionsschutzmittel und Korrosionsschutzmittel-Systeme als hinsichtlich der schon bei der Herstellung erforderlichen Versetzung mit Lösemittel als nachteilig empfunden. Andererseits sind die bekannten Korrosionsschutzmittel hinsichtlich des erforderlichen Anlagenaufwandes, insbesondere das erwähnte Flutwachs-Verfahren, sehr kapitalintensiv.

Im Hinblick auf den vorbeschriebenen Stand der Technik beschäftigt sich die Erfindung mit der technischen Problematik, ein wachsartiges Korrosionsschutzmittel anzugeben, welches bei vorteilhafter Herstellbarkeit rationell applizierbar ist.

Diese technische Problematik ist zunächst und im wesentlichen beim Gegenstand des Anspruches 1 gelöst, wobei darauf abgestellt ist, daß das Korrosionsschutzmittel eine Formulierung als Lösungsmittelfreies , rieselfähiges Pulver oder Granulat auf Basis eines paraffinischen Stoffes aufweist, mit mindestens einem Korrosionsschutzadditiv. Es ist ein wachsartiges Bestandteil eines Korrosionsschutzmittels oder auch vollständiges Korrosionsschutzmittel geschaffen, daß in Granulat- oder Pulverform vorliegt. Hinsichtlich des Bestandteiles ist darauf abgestellt, daß auch später noch das eigentliche Korrosionsschutzmittel hinzugemischt werden kann. Ein solches Korrosionsschutzmittel kann umweltfreundlich hergestellt und auch transportiert und gelagert werden. Die trockene Formulierung kann durch eine weitgehend vorgebbare und einstellbare Konfektionierung auf bestimmte Anwendungsfälle optimiert werden. Da kein Lösungsmittel vorhanden ist, solange das Korrosionsschutzmittel eine pulverartige oder granulatförmige Konsistenz aufweist, kann ein solches Lösungsmittel auch nicht entweichen. Bei Bedarf kann das Korrosionsschutzmittel in einem Weichmacher dispergiert und bei Raumtemperatur auch solcher Art lösungsmittelfrei verarbeitet werden. Es kann auch in einem Lösungsmittel gelöst oder in Wasser oder Amin emulgiert bzw. dispergiert werden. Es versteht sich, daß die Flüssigkeiten hierzu erhitzt werden, über den Schmelzpunkt des Pulvers bzw. Granulats. Solcherart erlaubt die pulverartige oder granulatartige Formulierung trotz eines hohen Paraffinanteils eine gute Handhabbarkeit. Es ist auch erst am Verarbeitungsort eine Vermischung mit dem Lösungsmittel oder Wasser erforderlich. Gegebenenfalls kann auch eine Vermischung mit an Luftsauerstoff vernetzbaren Polymeren vorgenommen werden, wie weiter unten noch ausgeführt. Bei der Applizierung kann auch im Durchlaufverfahren gearbeitet werden. Beispielsweise kann das Korrosionsschutzmittel kontinuierlich in ein Gefäß mit Lösungsmittel oder Wasser und den vernetzbaren Polymeren eingeschleust werden und die so erhaltene dann verflüssigte Lösungsmittelsubstanz in an sich üblicher Weise durch Verspritzen auf die zu schützenden Flächen aufgebracht werden. In vorteilhafter weiterer Ausgestaltung ist vorgesehen, daß das Korrosionsschutzmittel im Wirbelschicht- oder Sprühtrocknungsverfahren hergestellt ist. Hierdurch läßt sich in einfacher, rationeller Weise die gewünschte Formulierung als rieselfähiges Pulver oder Granulat erreichen. Hier kann das in flüssiger Form in die Wirbelschicht eingebrachte Korrosionsschutzmittel zunächst auch einen Lösungsmittelanteil aufweisen. Dieser kann aber in dem Wirbelschicht-Trocknungsverfahren im Kreislauf geführt werden. Das erhaltene Pulver oder Granulat ist in jedem Fall lösungsmittelfrei. Auch ist es bevorzugt, daß das Korrosionsschutzmittel einen Anteil an oxidiertem Paraffin aufweist. Oxydiertes Paraffin ist vorteilhaft im Hinblick auf eine gewünschte Klebefähigkeit und Anhaftfähigkeit des Korrosionsschutzmittels. Darüber hinaus ist es auch vorteilhaft, wenn das Korrosionsschutzmittel einen Anteil an verseiftem oxidiertem Paraffin aufweist. Insbesondere im Hinblick auf eine gewünschte Filmbildung und auch Anhaft-Eigenschafen. Es ist auch bevorzugt, daß das Paraffin bzw. der Paraffinanteil in dem Korrosionsschutzmittel einen Erweichungspunkt zwischen 30 und 110°C, vorzugsweise von ca. 55 bis 75°C aufweist. Das Korrosionsschutzmittel kann auch einen gewissen Anteil an mit Luftsauerstoff vernetzenden Polymeren aufweisen. Diese können unter Umständen in das Pulver oder Granulat integriert sein oder auch erst später, wie erwähnt, zugemischt werden. Diese Polymere sind insbesondere dann vorteilhaft, wenn das Korrosionsschutzmittel zumindest teilweise, wie weiter unten noch erläutert, niedrigschmelzendere Paraffinbestandteile aufweist, so daß trotz dieser niedrigschmelzenderen Anteile eine relativ rasche Aushärtung des nach Auftragen auf das zu schützende Objekt sich bildenden Korrosionsschutzfilmes erfolgt und danach auch bei den üblicherweise geforderten höheren Temperaturen, also etwa im Bereich von 90° bis 120° C, stabil ist. Der hohe Paraffinanteil des hier beschriebenen Korrosionsschutzmittels ist auch dahingehend vorteilhaft, daß schon kurz nach dem Aufbringen auf die zu schützende Fläche eine wesentliche Erstarrung erfolgt und somit ein Verlaufen in sehr dünne Schichten nicht mehr auftritt. In weiterer vorteilhafter Ausgestaltung ist vorgesehen, daß das Korrosionsschutzmittel elektrostatisch aufladbare Substanzen aufweist. Dies ist etwa dahingehend von Vorteil, daß das Korrosionsschutzmittel unmittelbar - trocken, in der beschriebenen pulverartigen oder granulatartigen Formulierung, - auf zu schützende Flächen aufgebracht werden kann und dort - jedenfalls zunächst - elektrostatisch anhaftet. Solche Substanzen können bspw. Kunststoffteile, Calciumsalze, Calciumcarbonate oder Metallpulver wie bspw. Aluminiumpulver sein. Durch eine vorherige Aufheizung der zu schützenden Fläche oder ein nachfolgendes Durchsetzen oder Vorbeiführen an einer erhitzenden Einrichtung wie bspw. einer Infrarotquelle oder auch durch Mikrowellen kann eine Verfilmung des so aufgebrachten Pulvers oder Granulats erreicht werden. Das Korrosionsschutzmittelkann hinsichtlich des Pulvers eine Teilchengröße bis hin zu wenigen µm aufweisen. Darüber hinaus als Granulat eine Teilchengröße von bis zu einigen mm.

Eine weitere besondere Lehre der Erfindung sieht vor, daß ein Teilchen, insbesondere ein Granulatelement des Korrosionsschutzmittels aus Schichten mit unterschiedlichen Stoffeigenschaften zusammengesetzt ist. Dies läßt sich besonders vorteilhaft im Wirbelschichtverfahren erreichen. Beispielsweise kann in einer inneren Schicht oder im Kern ein (paraffinischer) Stoff mit sehr stark klebrigen Eigenschaften vorgesehen sein, während eine Außenschicht, bei insgesamt etwa drageeartiger Ausbildung der Teilchen mit härterem, nicht klebenden Komponenten besteht.

Als Korrosionsschutzadditive können bspw. Calciumsulfonate zum Einsatz kommen. Als Füllstoffe zum Beispiel Kreiden. Hinsichtlich weiter vorzugsweise vorhandener Weichmacher wird bspw. auf Mineralöle zurückgegriffen. Die an Luftsauerstoff vernetzenden Polymere können zum Beispiel Kohlenwasserstoffharze sein, Polybutene oder Alkydharze. Darüber hinaus können Zusatzstoffe wie Emulgatoren, Netzmittel, insbesondere Aminderivate, vorgesehen sein.

Gegenstand der Erfindung ist auch ein Verfahren zum Aufbringen eines Korrosionsschutzmittels auf eine zu schützende Fläche, bspw. einen Teil einer KfZ-Karosserie. Um hier zu einer vorteilhaften Verarbeitungsfähigkeit und guten Eigenschaften des aufgebrachten Korrosionsschutzmittels zu kommen, schlägt die Erfindung verfahrensmäßig vor, daß zunächst ein wachsartiges Korrosionsschutzmittel in einer Formulierung als lösungsmittelfreies, trockenes und rieselfähiges Pulver oder als Granulat hergestellt wird und daß dieses Korrosionsschutzmittel zur Aufbringung bspw. im Sprühverfahren mit Lösungsmittel oder Wasser vermischt wird.

Im übrigen wird hinsichtlich des Korrosionsschutzmittels und dessen Anteile auf die obigen Ausführungen verwiesen.

Für die Zusammensetzung des Korrosionsschutzmittels ist etwa ein Anteil von 50 bis 90% von teilweise oxidiertem Paraffin, 5 bis 20% Ca-Sulfonat oder Kreide und ggf. bis zu 30% Keimmaterial bevorzugt. Zusätzlich können noch weitere Korrosionsschutzadditive, Füllstoffe und elektrostatisch aufladbare Substanzen (einzeln oder jeweils in Kombination) vorgesehen sein.

Eine konkrete beispielhafte Formulierung ist 70% anoxidiertes Petrolatum, 10% Ca-Sulfonat und 20% Paraffin (reines Paraffin). Der Paraffinanteil kann auch durch einen Anteil an Mikrowachs ersetzt sein. Mikrowachse sind bekanntlich wie Paraffin Gemische aus unterschiedlichen Kohlenwasserstoffen, jedoch enthalten Sie überwiegend Iso-Paraffine.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Korrosionsschutzmittel, dadurch gekennzeichnet, daß das Korrosionsschutzmittel eine Formulierung als lösungsmittelfreies, trockenes und rieselfähiges Pulver oder Granulat aufweist, auf Basis eines paraffinischen Stoffes, mit mindestens einem Korrosionsschutzadditiv.

2. Korrosionsschutzmittel nach Anspruch 1 oder insbesondere danach, dadurch gekennzeichnet, daß das Korrosionsschutzmittel im Wirbelschicht- oder Sprühtrocknungsverfahren hergestellt ist.

3. Korrosionsschutzmittel nach einem oder mehreren der vorhergehenden Ansprüche oder insbesondere danach, gekennzeichnet durch einen Anteil an oxidiertem Paraffin.

4. Korrosionsschutzmittel nach einem oder mehreren der vorhergehenden Ansprüche oder insbesondere danach, dadurch gekennzeichnet, daß der Anteil an oxidiertem Paraffin zumindest teilweise verseift ist.

5. Korrosionsschutzmittel nach einem oder mehreren der vorhergehenden Ansprüche oder insbesondere danach, dadurch gekennzeichnet, daß der Anteil an Paraffin einen Erweichungspunkt zwischen 30 und 110°C, vorzugsweise von ca. 55° bis 75°C aufweist.

6. Korrosionsschutzmittel nach einem oder mehreren der vorhergehenden Ansprüche oder insbesondere danach, dadurch gekennzeichnet, daß das Korrosionsschutzmittel elektrostatisch aufladbare Substanzen aufweist.

7. Korrosionsschutzmittel nach einem oder mehreren der vorhergehenden Ansprüche oder insbesondere danach, dadurch gekennzeichnet, daß das Korrosionsschutzmittel eine Teilchengröße im Bereich von einigen µm bis einigen mm aufweist.

8. Korrosionsschutzmittel nach einem oder mehreren der vorhergehenden Ansprüche oder insbesondere danach, dadurch gekennzeichnet, daß ein Teilchen, insbesondere ein Granulatelement, aus Schichten mit unterschiedlichen Stoffeigenschaften zusammengesetzt ist.

9. Verfahren zum Aufbringen eines Korrosionsschutzmittels auf eine zu schützende Fläche, bspw. einen Teil einer KfZ-Karosserie, dadurch gekennzeichnet, daß zunächst ein wachsartiges Korrosionsschutzmittel in einer Formulierung als lösungsmittelfreies, trockenes und rieselfähiges Pulver oder Granulat hergestellt wird, auf Basis eines paraffinischen Stoffes, und daß dieses Korrosionsschutzmittel zur Aufbringung bspw. im Sprühverfahren mit Lösungsmittel oder Wasser vermischt wird oder daß das Korrosionsschutzmittel unmittelbar als Pulver oder Granulat auf eine zu schützende Fläche aufgebracht wird.

10. Verfahren nach Anspruch 9 oder insbesondere danach, dadurch gekennzeichnet, daß das Korrosionsschutzmittel im Wirbelschicht- oder Sprühtrocknungsverfahren hergestellt wird.

11. Verfahren nach Anspruch nach einem der Ansprüche 9 oder 10 oder insbesondere danach, dadurch gekennzeichnet, daß das Korrosionsschutzmittel weiter eines der Merkmale der Ansprüche 3 bis 8 aufweist.

## Claims

1. Corrosion protection agent, characterised in that the corrosion protection agent has a formulation as solvent-free, dry and pourable powder or granules, based on a paraffinic material, having at least one corrosion protection additive.

2. Corrosion protection agent according to claim 1 or in particular, characterised in that the corrosion protection agent is produced by a fluidised bed or spray-drying process.

3. Corrosion protection agent according to one or more of the preceding claims or in particular, characterised by a proportion of oxidised paraffin.

4. Corrosion protection agent according to one or more of the preceding claims or in particular, characterised in that the proportion of oxidised paraffin is at least partly saponified.

5. Corrosion protection agent according to one or more of the preceding claims or in particular, characterised in that the proportion of paraffin has a softening point between 30 and 110°C; preferably from about 55° to 75°C.

6. Corrosion protection agent according to one or more of the preceding claims or in particular, characterised in that the corrosion protection agent has electrostatically chargeable substances.

7. Corrosion protection agent according to one or more of the preceding claims or in particular, characterised in that the corrosion protection agent has a particle size in the range from a few µm to a few mm.

8. Corrosion protection agent according to one or more of the preceding claims or in particular, characterised in that a particle, in particular a granule element, is composed of layers having different material properties.

9. Process for applying a corrosion protection agent to a surface to be protected, for example a part of a motor vehicle body, characterised in that initially a wax-like corrosion protection agent is produced in a formulation as solvent-free, dry and pourable powder or granules, based on a paraffinic material, and in that this corrosion protection agent is mixed with solvent or water for application, for example by a spraying process, or in that the corrosion protection agent is applied directly as powder or granules to a surface to be protected.

10. Process according to claim 9 or in particular, characterised in that the corrosion protection agent is produced by a fluidised bed or spray-drying process.

11. Process according to the claim according to one of claims 9 or 10 or in particular, characterised in that the corrosion protection agent also has one of the features of claims 3 to 8.

## Revendications

1. Un produit protecteur anticorrosion, caractérisé en ce que le produit protecteur anticorrosion est une formulation sous la forme d'une poudre ou d'un granulat, sec et fluide, sans solvants, à base de substance paraffinique, comportant au moins un additif protecteur anticorrosion.

2. Un produit protecteur anticorrosion selon la revendication 1 ou en particulier, comme suit, caractérisé en ce que le produit protecteur anticorrosion est fabriqué par un procédé en couche tourbillonnaire (lit fluidisé) ou par séchage par pulvérisation.

3. Un produit protecteur anticorrosion selon une ou plusieurs des revendications précédentes ou en particulier comme suit, caractérisé en ce qu'il comprend une proportion de paraffine oxydée.

4. Un produit protecteur anticorrosion selon une ou plusieurs des revendications précédentes ou en particulier comme suit, caractérisé en ce que la proportion de paraffine oxydée est au moins partiellement saponifiée.

5. Un produit protecteur anticorrosion selon une ou plusieurs des revendications précédentes ou en particulier comme suit, caractérisé en ce que la proportion de paraffine présente un point d'amollissement compris entre 30 et 110°C, de préférence entre 55° et 75°C.

6. Un produit protecteur anticorrosion selon une ou plusieurs des revendications précédentes ou en particulier comme suit, caractérisé en ce que le produit protecteur anticorrosion renferme des substances pouvant être chargées électrostatiquement.

7. Un produit protecteur anticorrosion selon une ou plusieurs des revendications précédentes ou en particulier comme suit, caractérisé en ce que le produit protecteur anticorrosion présente une taille de particule dans la plage de quelques µm à quelques mm.

8. Un produit protecteur anticorrosion selon une ou plusieurs des revendications précédentes ou en particulier comme suit, caractérisé en ce qu'une particule, en particulier un élément de granulat, est constituée de couches renfermant des substances de propriétés différentes.

9. Un procédé d'application d'un produit protecteur anticorrosion sur une surface à protéger, par exemple un élément de carrosserie de véhicule automobile, caractérisé en ce que, d'abord, on prépare un produit protecteur anticorrosion paraffineux, sous la forme d'une formulation en poudre ou granulaire sèche et fluide, sans solvants, à base d'une substance paraffinique, et en ce que ce produit protecteur anticorrosion est mélangé à un solvant ou à de l'eau pour l'application, par exemple dans un procédé par pulvérisation, ou en ce que le produit protecteur anticorrosion est directement appliqué, sous forme de poudre ou de granulat, sur une surface à protéger.

10. Un procédé selon la revendication 9 ou en particulier comme suit, caractérisé en ce que le produit protecteur anticorrosion est fabriqué par un procédé en couche tourbillonnaire (lit fluidisé) ou par séchage par pulvérisation.

11. Un procédé selon l'une quelconque des revendication 9 ou 10 ou en particulier comme suit, caractérisé en ce que le produit protecteur anticorrosion présente en outre l'une des caractéristiques des revendications 3 à 8.
